# EUROPEAN PATENT SPECIFICATION

(11) **EP 2 052 036 B1**
(45) Date of publication and mention of the grant of the patent: **13.04.2011**
(21) Application number: 07796548.1
(22) Date of filing: 28.06.2007
(51) Int. Cl.: C09C 1/36

(54) **IMPROVED PROCESS FOR MANUFACTURING TITANIUM DIOXIDE PIGMENT**
VERBESSERTES VERFAHREN ZUR HERSTELLUNG VON TITANDIOXIDPIGMENT
PROCÉDÉ PERFECTIONNÉ DE FABRICATION D'UN PIGMENT DE DIOXYDE DE TITANE

(30) Priority: 25.07.2006 US 492587
(43) Date of publication of application: 29.04.2009
(73) Proprietor: Tronox LLC, Oklahoma City OK 73126-8859 (US)
(72) Inventor: GOPARAJU, Venkata, Rama, Rao, Edmond, Oklahoma 73013 (US); HOSKINS, Ronnie, Yukon, OK 73099 (US); PILLARS, Darci, N., Moore, Oklahoma 73160 (US)
(74) Representative: Roberts, Mark Peter
(86) International application number: PCT/US2007/015041
(87) International publication number: WO 2008/013643

(56) References cited:
- EP-B- 0 842 231
- US-A- 5 356 470
- US-A- 5 824 145
- US-A- 5 824 146

## Description

The present invention relates to processes for manufacturing chloride-process titanium dioxide pigments, and in particular, to processes for wet- or media-milling crude chloride-process titanium dioxide pigments prior to the application of inorganic oxide and organic finishing treatments.

Titanium dioxide pigments are used in paints, plastics, paper, and cosmetics where the pigment powders are added to color and/or opacify the desired application. Generally, the rutile pigments are prepared by oxidizing titanium tetrachloride in the vapor phase. The resulting oxidation product is a crude titanium dioxide pigment containing substantial amounts of oversized particles. To render this crude product suitable for use as a pigment in any of these various end uses, typically the crude titanium dioxide pigment is made into an aqueous slurry which is then wet- or media-milled in the presence of a milling medium (such as zircon sand, for example, in the manner of U.S. Patent No. 5,544,817 to Brownbridge et al.) and surface modified with any of various inorganic oxides, such as SiO₂, Al₂O₃, ZrO₂ and CeO₂. A variety of organic finishing or surface treatments are well known as well.

The use of slurries which are highly concentrated in the crude chloride-process titanium dioxide product (high solids slurries) is very desirable for improving the efficiency of the media-milling step and increasing the throughput of the milling and finishing parts of the overall manufacturing process. The limiting factor on using higher solids crude TiO₂ slurries is the viscosity of the slurry, in that increasing amounts of the crude oxidation product correspond also to increasing slurry viscosities. Increased slurry viscosities in turn translate into increased energy requirements for milling the crude product and/or less than optimal mixing and less than smooth and uniform coatings of the inorganic oxides added as mentioned above.

Consequently, various approaches have been suggested over the years for making high solids, aqueous slurries of crude chloride process titanium dioxide materials with lower viscosities. For example, U.S. Patent No. 6,528,568 B2 to Kirnniard et al. describes a problem encountered in the particular context of making very durable, dense silica-treated grades with good gloss and opacity, in that on the dense silica treatment of wet-milled slurries of the crude product/oxidizer discharge agglomeration and formation of strong aluminum silicate bonds were found to occur. The resulting agglomerated materials were resistant to fluid energy milling to the desired particle sizes, and optical properties were compromised as a result. Kinniard et al.'s solution involved partially or substantially removing salt from the oxidizer discharge and adding a dispersant to the high solids slurry before milling, to provide a "highly dispersed, highly deagglomerated slurry" that could then be dense silica-treated without agglomerating to an extent whereby satisfactory optical properties could not be realized after fluid energy milling. Salt removal was to be accomplished by neutralizing and washing the raw oxidizer discharge to substantially reduce the salt content. A low viscosity, high solids (50 to 60+ percent) slurry was then repulped with water containing a dispersant, prior to the media milling.

U.S. Patent No. 5,501,732 to Niedenzu describes the use of various viscosity reducents during milling of a high solids slurry (ranging from 30 to 85 percent solids), such as triethanolamine, 2-amino-2 methyl -1-propanol, trimethylol propane, tetrapotassium pyrophosphate or mixtures thereof, in the context of making a silanized titanium dioxide pigment.

Other references, for example, U.S. Patent No. 5,622,628 to Trendell et al. and U.S. Patent No. 4,978,396 to Story, are not concerned as in the present invention with production of a high solids, low viscosity slurry suitable for media milling, but are instead concerned with producing concentrated slurries of surface treated, finished pigments having low viscosities. Trendell et al. is similar though to Kinniard et al. in filtering and washing the resultant filtercake to remove soluble ionic species, before folly concentrating the slurry from about 50 percent solids up to 70 to 80 percent solids through cross-flow filtration. Story uses a dewatering step conducted at superatmospheric pressure to concentrate a slurry from 20 to 50 percent solids to from about 70 to about 80 percent solids.

EP 0,842,231-B1 discloses a process whereby an initial high solids slurry having a solids concentration of 83% to 92% is produced, and then diluted to a concentration of 70% - 73%.

The present invention provides an improved process for making a titanium dioxide pigment, wherein a) a high solids slurry is prepared by gathering materials including crude titanium dioxide from the oxidation of titanium tetrachloride, a dispersant and water and then mixing the gathered materials to form the slurry, wherein the high solids slurry comprises at least 50 percent by weight of crude titanium dioxide, b) the high solids slurry is then diluted with the addition with mixing of a further amount of water so as to provide a slurry having a solids concentration that does not exceed 61 % and c) the resulting slurry is then media-milled. The media-milled pigment is then suited for being conventionally finished through treatment with inorganic and/or organic finishing treatments and fluid energy milling.

Surprisingly, it has been found that forming an aqueous slurry having a higher concentration of the crude titanium dioxide oxidizer product and then diluting the slurry to a lesser solids concentration (not exceeding 61 %) results in a lower viscosity material for media milling and finishing, as compared to the circumstance wherein the slurry is made up initially to the lesser concentration using the same crude product, same dispersant and same water. In brief, by forming the slurry in a different manner, compositionally identical slurries can be prepared having different viscosities.

In a first embodiment of the present invention, reflecting this first aspect of producing a slurry to be media-milled having a certain, high content of the crude titanium dioxide product but with a lesser viscosity, the initial high solids slurry is prepared to a solids concentration that is above a desired or targeted lesser concentration of the crude titanium dioxide product, and the dilution is to provide the desired or targeted lesser concentration. This first aspect of the present invention offers significant value, for example, in addressing the problems mentioned by Kinniard et al. (U.S. Pat. No. 6,528,568 B2) of making dense silica-treated titanium dioxide pigments which are otherwise prone to agglomeration, as a sufficient reduction in viscosity can be made by the inventive process leading into media-milling and the dense silica treatment such that the salt-removal steps indicated as necessary by Kinniard et al. can be omitted as unnecessary.

In a second, related aspect, by reason of this phenomenon, a slurry having an increased solids concentration can be prepared that nevertheless possesses the same viscosity for media milling as a slurry prepared directly to a lesser solids concentration. In this embodiment, a slurry is formed comprising crude titanium dioxide, water and a dispersant at a first, elevated solids concentration, and water is added to dilute the slurry to a targeted viscosity corresponding to that viscosity characterizing a slurry directly prepared and made up from the same materials without a dilution step. Even after dilution, the slurry prepared and diluted to the targeted viscosity according to the present invention possesses a higher solids content, although it does not exceed 61%. Those skilled in the art will appreciate that this higher solids content means that the drying costs per ton of pigment can be reduced and overall productivity improved from the milling and finishing operations as a whole, adding significant value in this second, related aspect as well.

The process of the present invention concerns improved processes for making titanium dioxide pigments via the well-known chloride process, wherein a titanium-bearing ore and/or slag feed is chlorinated in the presence of a reductant such as a petroleum coke to produce titanium tetrachloride, unreacted feed and coke as well as undesired chlorination products (for example, waste metal chlorides from other metals present in the ore and/or slag feed) are separated from the desired titanium tetrachloride chlorination product, then the titanium tetrachloride is oxidized to provide a crude titanium dioxide product.

Conventionally the crude titanium dioxide product is incorporated with a dispersant into water to form a slurry, and the slurry is wet- or media-milled in the presence of a grinding medium such as, for example, zircon sand. Thereafter, inorganic and/or organic surface treatments are typically employed in various combinations with a filtering, washing and recovery of the titanium dioxide and with fluid energy milling/micronization of the titanium dioxide, to produce ultimately a finished titanium dioxide product which is adapted for a desired end use. Those skilled in the art will be well familiar with the materials, devices and process steps that can be conventionally employed for taking a media-milled, crude titanium dioxide product through to a finished titanium dioxide pigment, and as these subsequent steps have no bearing on the present invention, further description will not be undertaken herein of the finishing of the media-milled, crude titanium dioxide materials produced by the present invention.

The present invention is concerned more particularly with enabling the media milling of high solids slurries with reduced viscosities, or of higher solids slurries with a given characteristic viscosity, according to the first and second aspects mentioned above, respectively.

As has been mentioned, these objectives are obtainable by means of the discovery that a 60 percent solids slurry made from crude chloride-process titanium dioxide, a dispersant and water can be made to have a lower viscosity for being milled in a sand mill, for example, by making up a slurry that contains in excess of 60 percent solids, then adding in the requisite amount of dilution water with further mixing to achieve the 60 percent solids content. In like fashion, a slurry can be made by the same dilution method which has more than 60 percent solids, but which has the same viscosity for media-milling as only a 60 percent solids slurry that is made up directly from the crude chloride-process titanium dioxide, a dispersant and water.

The high solids slurries made by the present invention comprise at least 50 percent by weight of crude pigment, and preferably at least about 60 percent by weight of the crude pigment solids. The initial, higher solids slurry prepared according to the present invention in its first aspect is at least about 2 percent above the targeted final solids content of the slurry for media milling, and is diluted accordingly to the targeted final solids content, which does not exceed 61 %. Thus, for example, where the slurry to be media-milled is desirably 60 percent by weight of crude titanium dioxide, preferably the initial slurry is prepared to contain at least about 62 percent of the crude titanium dioxide material.

### Illustrative Examples

Crude titanium dioxide pigment obtained from the vapor phase oxidation of titanium tetrachloride and containing 0.8% alumina in its crystalline lattice was dispersed in water in the presence of 0.18% by weight (based on pigment) of sodium hexametaphosphate (SHMP) dispersant, along with a sufficient amount of sodium hydroxide to adjust the pH of the dispersion to 9.5 or greater, to achieve an aqueous dispersion with a solids content of 61 % by weight. Using a Brookfield Viscometer (Model DV-I, Spindle #5, 100 rpm), the viscosity of the crude pigment slurry made with 61% solids was found to be 906 cP at 21 °C.

A slurry was then prepared by the same method to a 63% solids content, and then diluted with mixing with additional water to the same 61 % solids content. This slurry had a measured viscosity of only 284 cP at 21°C.

Similarly, other crude pigment slurries of various solids contents were prepared directly and then by overconcentration and dilution according to the present invention, and the viscosities of each such slurry were measured for comparison. The results are presented in Table 1.

Samples made by the direct method were stirred for several hours to see if any change was observed in the viscosity, but no change was observed.

**Table 1**

| Pct. Solids, Ending Slurry | Direct Method (cP) | Dilution Method (cP) |
|---|---|---|
| 62.6 | 1060 | |
| 61 | 906 | 284 |
| 58.4 | 544 | 132 |
| 57.4 | 416 | 106 |
| 55.4 | 280 | 72 |
| 54.4 | 246 | 60 |

The results in Table 1 demonstrate that a very significant reduction in the viscosity of an aqueous, crude chloride process titanium dioxide pigment slurry can be achieved readily and simply according to the present invention in a first aspect before media milling, without reducing the solids content and so reducing throughput. The results in Table 1 further demonstrate that for an equivalent viscosity going into media milling, according to the second aspect of the present invention the solids content of the crude pigment slurry can be desirably increased to improve throughput and productivity, for example, from a solids content of about 55.4% (shown as having a viscosity of 280 centipoise, for a slurry prepared by the conventional direct method) to a solids content of about 61 % (measured viscosity of 284 centipoise for a slurry prepared by the method of the present invention).

## Claims

1. A process for manufacturing a titanium dioxide pigment, comprising the steps of:
a) preparing an aqueous, high solids slurry by gathering materials including crude titanium dioxide from the oxidation of titanium tetrachloride, a dispersant and water and then mixing the gathered materials to form the slurry, wherein the high solids slurry comprises at least 50 percent by weight of crude titanium dioxide;
b) diluting the aqueous, high solids slurry by adding a further amount of water to the high solids slurry with mixing to provide a certain targeted, lesser solids concentration of the crude titanium dioxide that is 2 percent or more less than the initial, high solids concentration and does not exceed a solids concentration of 61 %;
c) media-milling the resultant aqueous, lesser solids slurry;
d) recovering the media-milled, crude titanium dioxide product; and
e) finishing the media-milled, crude titanium dioxide product to produce a finished titanium dioxide pigment product.

2. A process as defined in Claim 1, wherein the preparation of the aqueous, high solids slurry and its dilution are done continuously, for providing a crude titanium dioxide slurry continuously to be media-milled.

3. A process as defined in Claim 1, wherein the initial aqueous, high solids slurry comprises at least about 60 percent by weight of crude titanium dioxide.

## Patentansprüche

1. Verfahren zur Herstellung eines Titandioxidpigments, umfassend folgende Schritte:
a) Ansetzen einer wässrigen Masse mit hohem Feststoffgehalt durch Zusammenstellung von Stoffen einschließlich rohem Titandioxid aus der Oxidation von Titantetrachlorid, einem Dispergator und Wasser und anschließendes Mischen der zusammengestellten Stoffe, um die Masse zu bilden, wobei die Masse mit hohem Feststoffgehalt mindestens 50 Gewichtsprozente rohen Titandioxids umfasst;
b) Verdünnung der wässrigen Masse mit hohem Feststoffgehalt durch Hinzufügen einer weiteren Wassermenge zu der Masse mit hohem Feststoffgehalt, mit Mischen, um eine bestimmte angestrebte geringere Feststoffkonzentration des rohen Titandioxids zu erhalten, die 2 oder mehr Prozent geringer ist als die ursprüngliche Feststoffkonzentration und eine Feststoffkonzentration von 61 Prozent nicht überschreitet;
c) Medienzerkleinerung der resultierenden wässrigen Masse mit geringerem Feststoffgehalt;
d) Rückgewinnung des medienzerkleinerten Produkts des rohen Titandioxids; und
e) Endbearbeitung des medienzerkleinerten Produkts des rohen Titandioxids, um ein endbearbeitetes Titandioxidpigmentprodukt herzustellen.

2. Verfahren gemäß Anspruch 1, bei dem das Ansetzen der wässrigen Masse mit hohem Feststoffgehalt und ihre Verdünnung kontinuierlich erfolgen, um eine Masse aus rohem Titandioxid zu erhalten, die kontinuierlich medienzerkleinert werden soll.

3. Verfahren gemäß Anspruch 1, bei dem die ursprüngliche wässrige Masse mit hohem Feststoffgehalt mindestens 60 Gewichtsprozente rohen Titandioxids umfasst.

## Revendications

1. Procédé de fabrication d'un pigment à base de dioxyde de titane, comportant les étapes suivantes :
a) préparer une suspension aqueuse à haute teneur en solides, en mettant ensemble des matériaux comprenant du dioxyde de titane brut issu de l'oxydation de tétrachlorure de titane, un agent dispersant et de l'eau, et en mélangeant ensuite ces matériaux rassemblés pour en faire une suspension, laquelle suspension aqueuse à haute teneur en solides contient au moins 50 % en poids de dioxyde de titane brut ;
b) diluer cette suspension aqueuse à haute teneur en solides, en ajoutant et mélangeant une quantité supplémentaire d'eau à la suspension à haute teneur en solides, de manière à parvenir à une certaine concentration ciblée, plus faible, de dioxyde de titane brut solide, qui soit inférieure d'au moins 2 % à la haute concentration de solides initiale et n'excède pas une concentration de solides de 61 % ;
c) soumettre la suspension aqueuse résultante, à concentration de solides abaissée, à un broyage moyen ;
d) récupérer le produit, du dioxyde de titane brut moyennement broyé ;
e) et traiter le dioxyde de titane brut moyennement broyé ainsi obtenu pour en faire, en tant que produit fini, un pigment à base de dioxyde de titane.

2. Procédé conforme à la revendication 1, dans lequel on effectue en mode continu la préparation de la suspension aqueuse à haute teneur en solides et sa dilution, de manière à produire en continu une suspension de dioxyde de titane brut à soumettre à un broyage moyen.

3. Procédé conforme à la revendication 1, dans lequel la suspension aqueuse initiale à haute teneur en solides contient au moins environ 60 % en poids de dioxyde de titane brut.
